# EUROPEAN PATENT APPLICATION

(11) **EP 2 448 337 A1**
(43) Date of publication of application: **02.05.2012**
(21) Application number: 10360038.3
(22) Date of filing: 02.11.2010
(51) Int. Cl.: H04W 52/24, H04W 52/36, H04W 52/26

(54) **Selection of a power offset table**

(71) Applicant: Alcatel Lucent, 75007 Paris (FR)
(72) Inventor: Phillips, Vincent Edward, Swindon SN3 4EH (GB)
(74) Representative: Leppard, Andrew John

(57) **Abstract**

A method of controlling user equipment communication within a cell, a network node and a computer program product are disclosed. The method of controlling user equipment communication within a cell comprises the steps of: determining a measured characteristic relating to user equipment communication within a cell; and utilising, when the measured characteristic falls within one of a plurality of ranges, a power offset table associated with that range for user equipment communication, each power offset table being associated with one of a plurality of different modulation schemes. Rather than using the same power offset table for all measured characteristics, a different power offset table may instead be provided, depending on which one provides for optimized throughput for those conditions.

## Description

### FIELD OF THE INVENTION

The present invention relates to a method of controlling user equipment communication within a cell, a network node and a computer program product.

### BACKGROUND

Wireless telecommunication systems are known. In those known systems, radio coverage is provided to user equipment, for example mobile telephones, by geographical area. In a cellular system, radio coverage is provided by geographical areas known as cells. A base station is located in each cell to provide the required radio coverage. User equipment in the area served by a base station receives information and data from the base station and transmits information and data to the base station.

Traditional base stations provide coverage in relatively large geographical areas and the cells are often referred to as macro cells. It is possible to provide smaller sized cells within a macro cell. Such smaller sized cells are sometimes referred to as micro cells, pico cells or femto cells. One way to establish a femto cell is to provide a femto base station that provides coverage having a relatively limited range within the coverage area of a macro cell. The transmission power of a femto base station is relatively low and, hence, each femto cell provides a small coverage area compared to that of macro cells and covers, for example, an office or a home.

Such femto cells are typically provided where the communications coverage provided by the macro cell is poor, or where a user wishes to use an alternative communications link provided locally by the femto base station to communicate with the core network. Such a situation might arise where, for example, a user has a pre-existing communications link and the user wishes to utilise that link in preference to that provided by a macro cell network provided to communicate with the core network.

User equipment can move between geographical base station coverage areas. The service provided to user equipment is overseen by a Radio Network Controller (RNC). The RNC communicates with user equipment and base stations and determines which base station each user equipment is primarily connected to. Furthermore, the RNC acts to control and communicate with a base station and user equipment and, in particular, when user equipment moves from the geographical area served by one base station to a geographical area served by another base station. A femto gateway typically provides similar functionality to that of the RNC and controls operation of any femto base stations.

Information and data transmitted by the base station to the user equipment occurs on radio frequency carriers known as downlink carriers. Information and data transmitted by user equipment to the base station occurs on radio frequency carriers known as uplink carriers.

The information and data transmitted between user equipment and the base station is encoded and modulated in accordance with predefined schemes to enable multiple, concurrent transmissions using a radio interface to occur.

The configuration of the radio interface between user equipment and any type of base station can affect the performance of the user equipment. Optimizing the radio interface is a complex activity and it can be problematic to be able to optimize the radio interface to account for any possible network deployment or configuration. Accordingly, it is desired to provide an improved technique for controlling communication with user equipment.

### SUMMARY

According to a first aspect, there is provided a method of controlling user equipment communication within a cell, the method comprising the steps of: determining a measured characteristic relating to user equipment communication within a cell; and utilising, when the measured characteristic falls within one of a plurality of ranges, a power offset table associated with that range for user equipment communication, each power offset table being associated with one of a plurality of different modulation schemes.

The first aspect recognises that a problem can occur when the configuration of the radio interface for wireless communication with user equipment is not as optimized as it could be. In particular, situations can occur where the radio interface is operating at a less than optimal throughout, given the characteristics of user equipment within a cell. In particular, a power offset table utilized by user equipment to determine an appropriate power offset from an allocated transport block size to use on its uplink channel for communications with its serving base station may not yield the best power offset for the prevailing conditions which may result in a less than optimal throughout being achieved.

Accordingly, a method of controlling user equipment communication is provided. A characteristic related to user equipment communications within a cell may be measured or identified. When the measured characteristic falls within a particular range, a power offset table associated with that range may be utilised for user equipment communications. Each of the power offset tables may be associated with a different modulation scheme, each power offset table may be optimized for that particular modulation scheme and one or more ranges of characteristics may be associated with each of these different tables. In this way, when a characteristic is measured the range that this characteristic falls into is determined and the corresponding power offset table for that range is then utilised for user equipment communication within that cell. Hence, rather than using the same power offset table for all measured characteristics, a different power offset table may be provided, depending on which one provides for optimized throughput for those conditions.

In one embodiment, the step of utilising comprises: utilising a first power offset table associated with a first modulation scheme when the measured characteristic falls within a first range and utilising a second power offset table associated with a second modulation scheme when the measured characteristic falls within a second range. Accordingly, when the measured characteristic is encompassed within a first range, then a first power offset table is provided. This power offset table may be associated with a first modulation scheme. However, should the measured characteristic be encompassed within a second range then a second, different power offset table may be utilised which is associated with a second, different modulation scheme. Accordingly, the most appropriate power offset table may be selected in order to maximise throughput.

In one embodiment, the step of utilising comprises: utilising a further power offset table associated with a further modulation scheme when the measured characteristic falls within a further range. Accordingly, further power offset tables may be provided which are associated with other modulation schemes and other ranges of the measured characteristic. By providing more power offset tables associated with other modulation schemes, more options for optimizing throughput exist.

In one embodiment, each range is non-overlapping. Accordingly, where one range ends, another range may start, with the ranges being mutually exclusive. It will be appreciated that this provides for certainty and predictability of power offset table for any particular measured characteristic.

In one embodiment, each range is overlapping by a hysteresis amount and the step of utilising comprises: utilising, when the measured characteristic falls within solely within one of the plurality of ranges, a power offset table associated with that range and otherwise continuing to utilise that previously utilised power offset table. Accordingly, at least two of the ranges may overlap. The overlapping of the ranges may include an amount which accounts for hysteresis. By providing overlapping ranges which account for hysteresis, the stability of the system is improved since rapid switching at the range ends can be avoided.

In one embodiment, the method comprises the step of: determining modulation schemes supported by the user equipment and wherein the step of utilising comprises: utilising the power offset table associated with the range only when the modulation scheme associated with the power offset table is supported by the user equipment. Accordingly, only power offset tables associated with modulation schemes supported by user equipment may be utilised for communications with that user equipment, otherwise a power offset table associated with a modulation scheme supported by the user equipment may be used. By avoiding utilising power offset tables optimized for modulation schemes not supported by user equipment, it is more likely that a power offset table optimized for the modulation scheme being supported by the user equipment is utilised for communications which helps to improve throughput.

In one embodiment, the method comprises the steps of: determining a plurality of expected throughput curves for user equipment when utilising each of the power offset tables optimised for associated modulation schemes and operating under a range of the measured characteristics; and setting ranges by identifying intersection points between the curves as range end points and associating a power offset table with each range which optimises expected throughput. Accordingly, the ranges may be pre-identified. To identify the ranges a number of throughput curves are derived. These throughput curves may map a predicted user throughput to cell throughput for each modulation scheme when operating under different conditions for a set of different characteristics. This set of curves may be overlaid to provide an indication of which power offset table is expected to provide an improved user throughput and/or cell throughput for any particular characteristic. Where the curves intersect may define range end points since, at one side of the intersection, one power offset table may provide improved throughput whilst, on the other side of the intersection, another power offset table may provide improved throughput. Accordingly, these intersections may indicate the location of range ends as defined by the nearest measurable characteristic to that intersection point. Through this analysis it may then be possible to associate a particular power offset table with each range so that when the characteristic falls within that range the appropriate power offset table can be identified.

In one embodiment, the measured characteristic comprises an indication of at least one of: a number of user equipment within the cell, a load on the cell, uplink noise and cell throughput. It will be appreciated that other measured characteristics or combinations of characteristics may be used.

According to a second aspect, there is provided a network node operable to control user equipment communication within a cell, the network node comprising: determination logic operable to determine a measured characteristic relating to user equipment communication within a cell; and utilisation logic operable to utilise, when the measured characteristic falls within one of a plurality of ranges, a power offset table associated with that range for user equipment communication, each power offset table being associated with one of a plurality of different modulation schemes.

In one embodiment, the utilisation logic is operable to utilise a first power offset table associated with a first modulation scheme when the measured characteristic falls within a first range and utilising a second power offset table associated with a second modulation scheme when the measured characteristic falls within a second range.

In one embodiment, the utilisation logic is operable to utilise a further power offset table associated with a further modulation scheme when the measured characteristic falls within a further range.

In one embodiment, each range is non-overlapping.

In one embodiment, each range is overlapping by a hysteresis amount and the utilisation logic is operable to utilise, when the measured characteristic falls within solely within one of the plurality of ranges, a power offset table associated with that range and otherwise continuing to utilise that previously utilised power offset table.

In one embodiment, the network node comprises: modulation scheme determining logic operable to determine modulation schemes supported by the user equipment and wherein utilisation logic is operable to utilise the power offset table associated with the range only when the modulation scheme associated with the power offset table is supported by the user equipment.

In one embodiment, the network node comprises: range determining logic operable to determine a plurality of expected throughput curves for user equipment when utilising each of the power offset tables optimised for associated modulation schemes and operating under a range of the measured characteristics and to set ranges by identifying intersection points between the curves as range end points and associating a power offset table with each range which optimises expected throughput.

In one embodiment, the measured characteristic comprises an indication of at least one of: a number of user equipment within the cell, a load on the cell, uplink noise and cell throughput.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a general femto cell deployment within one macro cell shown in Figure 1:
Figure 3A shows a power offset table which has been optimized for uplink transmissions between user equipment and base stations when using a QPSK modulation scheme;
Figure 3B shows a power offset table which has been optimized for uplink transmission between user equipment and base stations when utilizing a 16 QAM scheme;
Figure 4 illustrates an example throughput relationship for different modulation schemes determined by simulation; and
Figure 5 illustrates an example switching algorithm.

### DESCRIPTION OF THE EMBODIMENTS

### Deployment Overview

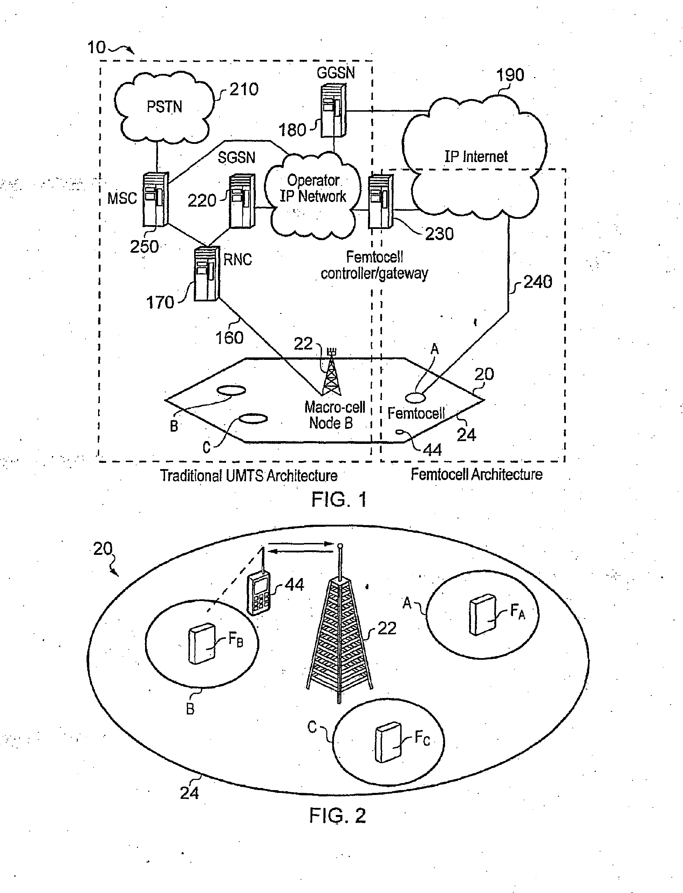

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided small cell base stations, in this example femto cell base stations F_{A} to Fc, each of which provides a femto cell A to C in the vicinity of a building within which the associated femto cell base station is installed. The femto cells A to C provide local communications coverage for a user in the vicinity of those buildings. Each femto cell base station F_{A} to Fc communicates via a femtocell controller/gateway 230. A mobility event such as a handover or camping event occurs between the base station 22 and the femto cell base stations F_{A} to Fc when the femto base stations F_{A} to Fc come within range. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to Fc are provided locally by customers. Such femto cell base stations F_{A} to F_{C} provide local coverage in areas of the macro network where quality of service may be low. Hence, the femto cell base stations F_{A} to Fc provide for improved quality of service in areas which are difficult for network operators. Femto base stations may be private access or may be public access. In a femto base station that provides private access, access is registered only to registered users, for example family members or particular groups of employees. In femto base stations which are public access, other users may use the femto base station, typically subject to certain restrictions to protect the quality of service received by preferred users.

To reduce the cost of the femto base stations F_{A} to Fc and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to Fc have extensive auto-configuration and self-optimisation capability to enable a simply plug-and-play deployment. As such, they are designed to automatically integrate themselves into an existing macro cellular wireless network 10.

The femto cells are normally grouped into clusters and each femto cell cluster behaves like a single RNC when communicating with an SGSN in an existing packet switch core network or when communication with a MSC in an existing circuit switched core network. However, given that the RNC functionality is geographically dispersed across a large number of network elements, it is necessary to deploy a femto gateway for each cluster of femto cells. This femto gateway terminates the signalling interfaces between the traditional core network elements and the femto cell cluster, thereby creating the notion of a single virtual RNC. This virtual RNC represents the femto cell cluster as a whole. The femto gateway supports a number of procedures that are implemented on the femto base stations themselves.

Although the power offset table technique mentioned herein has utility in any user equipment and base station arrangement, the technique is particularly beneficial in a femto or small cell deployment where the number of user equipment within these cells is likely to be low compared to that of a typical macro cell deployment.

### Power Offset Tables

When provisioning a network, a number of different reference power offset tables are provided to the radio access network. Typically, these reference power offset tables provide a relationship between transport block size and power offset required for different modulation schemes to be utilised for communications between base stations and user equipment. Typically, a base station will provide a serving grant to user equipment which indicates the transport block size permitted. The power offset table is used to determine the power offset that needs to be applied to the uplink channel to enable the transmission of the transport block. As will be well known in the art, the power used for transmission on the uplink channel is determined by tracking the power of the pilot channel and applying the offset specified by the power offset table in order to arrive at an absolute power to be used for uplink transmission.

User equipment that support High Speed Uplink Packet Access (HSUPA) in Wideband Code Division Multiple Access (W-CDMA) cellular networks have varying characteristics. Certain types of user equipment employ a single modulation scheme such as Quadrature Phase Shift Keying (QPSK), whilst others can support a number of modulation schemes such as 16 Quadrature Amplitude Modulation (16QAM) and QPSK. These latter user equipment types can select the modulation scheme that best exploits the prevailing environmental conditions in the cell. In doing so, the user throughput is maximized. As mentioned above, the user equipment transmits data blocks of varying size to the network at pre-determined power offsets relative to the signaling channel power. These pre-determined power offsets are calculated by the user equipment using the reference power offset table that the network has sent to the user equipment as part of the network's configuration of the user equipment.

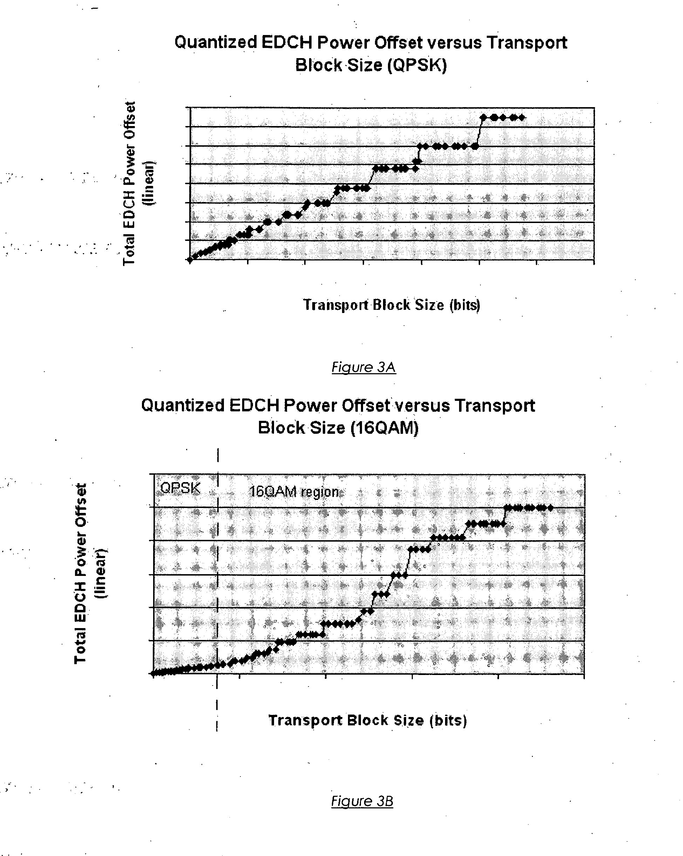

Figure 3A shows a power offset table which has been optimized for uplink transmissions between user equipment and base stations when using a QPSK modulation scheme. Likewise, Figure 3B shows a power offset table for uplink transmission between user equipment and base stations when utilizing a 16 QAM scheme. As can be seen, the power offset table for QPSK modulation (typically providing an offset of up to around 80) supports transport block sizes which are smaller (typically up to around 12,000 bits) than that for 16QAM modulation. In other words, 16QAM supports larger transport block sizes (typically up to around 25,000 bits), but this is at the cost of requiring a larger power offset (typically providing an offset of up to around 500). Also, whilst 16QAM modulation supports larger transport block size, this type of modulation is more susceptible to interference than QPSK. Hence, although QPSK supports lower transport block sizes, this form of modulation requires a smaller power offset and is less susceptible to interference that 16QAM (and so is more appropriate for noisy environments).

A power offset table is provided to user equipment to enable that user equipment determine the appropriate power offset to be used. The power offset table is typically provided to the user equipment by the RNC or another network node. 3GPP TR 25.931 describes an example mechanism for providing a reference power offset table to user equipment. In particular, the same signalling as an E-DCH Establishment and E-DCH TTI Reconfiguration may be used, not for TTI setting but instead for reference power offset table setting.

In accordance with this mechanism, a reference power offset table consisting of reference power offset and reference E-TFCI ordinates (maximum eight) are provided to the user equipment which then uses interpolation and extrapolation algorithms to attempt to reconstruct the power offset table. Accordingly, the fidelity with which the power offset tables can be accurately reconstructed in user equipment is somewhat limited.

### Network Simulation

Simulations have been performed which assess the relationship between user throughput and cell throughput when utilising each of the power offset tables with different user equipment characteristics under simulated operating conditions. These simulations or models assess the operation of the network with different numbers and arrangements of base stations, together with different numbers and arrangements of user equipment.

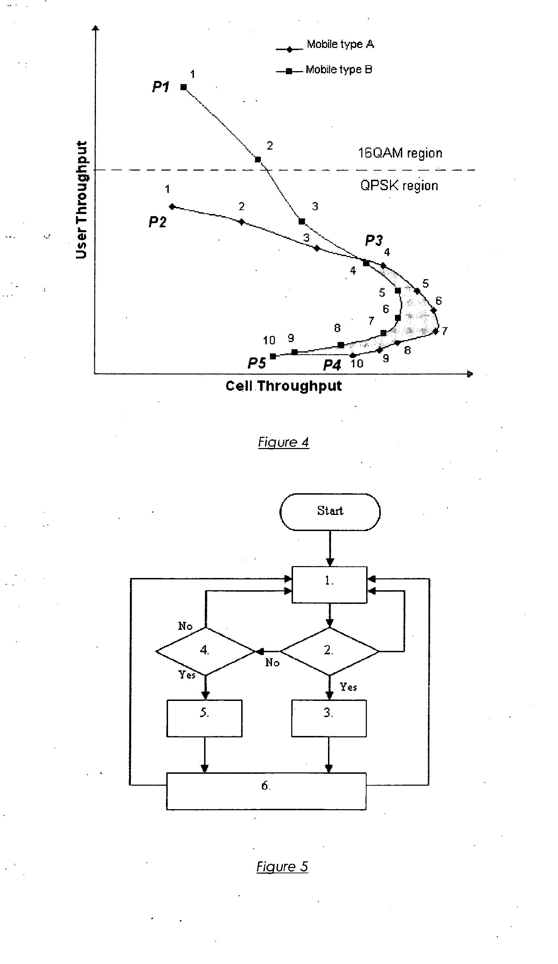

Figure 4 illustrates an example throughput relationship for different modulation schemes determined by the simulations mentioned above. The curve joining points P2, P3 and P4 show the simulation results of user throughput to cell throughput characteristics for increasing numbers of user equipment utilising QPSK modulation and utilising the QPSK power offset table shown in Figure 3A. The curve joining points P1, P3 and P5 shows the simulation results of user throughput to cell throughput characteristics for increasing numbers of user equipment when utilising 16 QAM modulation and the power offset table shown in Figure 3B. It will be appreciated that more than two modulation schemes may be provided.

As mentioned above, user equipment may be one of a number of different types. A so-called type A user equipment is only operable to support QPSK modulation, whereas a type B user equipment is able to utilise both QPSK and 16 QAM modulation. The curve P2-P4 displays the relationship of user throughput to cell throughput of a type A user equipment, which can only use QPSK modulation scheme and has been configured with a reference power offset table A (ref_PO_A). The line P1-P5 displays the relationship of user throughput to cell throughput of a type B user equipment, which can employ 16QAM or QPSK modulation scheme and has been configured with a reference power offset table B (ref_PO_B). Hence, type A user equipment is only ever able to achieve the user throughput to cell throughput characteristics of the curve joining points P2, P3 and P4. However, type B user equipment can achieve characteristics specified by any of the curves P2, P3 and P4, or P1, P3 and P5.

As can be seen, when there are fewer than four user equipment then higher throughput is achieved by utilising the 16 QAM power offset table (ref_PO_B) illustrated in Figure 3B. However, when four or more user equipment are active in the cell then greater cell throughput is achieved by utilising the QPSK power offset table (ref_PO_A) illustrated in Figure 3A.

In situations where only one user equipment is active in a cell, the user throughput is highest because the user equipment is able to use a high quantity of uplink resource. However, the cell throughput will be low since cell throughput also takes into account the period when the user equipment is not transmitting. As more user equipment are added to the cell, the mean user throughput declines but the cell throughput increases since there a fewer periods where no data is received by the network. As more user equipment are added to the cell, the cell throughput start to deteriorate as the network reaches a processing limit and cannot process large number of users fast enough.

Type B user equipment are able to exploit user throughput improvements in the 16QAM region because ref_PO_B generates data block power offsets which are biased in favour of the 16QAM region and the higher throughput illustrated by the steep gradient of line P1-P3. In comparison, the reference power offset table ref_PO_A generates data block power offsets which are biased in favour of the QPSK region and since QPSK cannot match the spectral efficiency of 16QAM, lower throughput results as illustrated by the shallow gradient of line P2-P3. However, type B user equipment will have no choice but to use QPSK as more users are added to the cell and a corresponding drop in gain for the cell throughput in comparison with the type A mobile is seen, as illustrated by the shaded region bounded by P3-P4-P5-P3. This is because ref_PO_B does not generate spectrally efficient data block power offsets for QPSK in this region.

Thus, the type B user equipment data block power offsets are tuned so that the throughput curve will follow the line P1-P3-P4 instead of P1-P3-P5. Hence maximizing the cell throughput for the type B user equipment.

### Range Setting

From the set of curves illustrated in Figure 4 it is possible to determine an intersection point of the curves, that intersection point identifying when a switch in power offset table should occur in order to optimise throughput. In this example, the intersection occurs between there being three user equipment in the cell and four user equipment in the cell. Accordingly, two ranges will be set: one for less than four user equipment (which is then associated with the power offset table for 16 QAM); and a second range for four or more user equipment (which is then associated with the power offset table for QPSK). It will be appreciated that more than two ranges may need to be specified. This range information may either be provided to the RNC or determined within the RNC itself.

### Power Offset Table Switching

In this example, should information provided to the RNC indicate that there are fewer than four user equipment within a cell, then the RNC or other network node will instruct those of the user equipment within the cell which are capable to support 16 QAM modulation with the ordinates for the 16 QAM power offset table shown in Figure 3A. It will be appreciated that any appropriate threshold may be set, as determined by simulation based on any measurable characteristic.

Those user equipment may then utilise the 16 QAM power offset table when performing 16 QAM modulation and achieve a throughput approximating that of the curve P1, P3. As can be seen from Figure 4, this throughput is greater than would be the case when using the QPSK power offset table and performing QPSK modulation, as illustrated by the curve P2, P3.

When the number of user equipment within the cell is reported to be four or more then the RNC will update the ordinates of the power offset table of those user equipment with those of the QPSK power offset table. In this way, higher cell throughput can be achieved with a wide number of user equipment or cell conditions than would otherwise be possible.

More generally, should a curve intersection determine a particular threshold where a switch in power offset table need to occur then the algorithm illustrated in Figure 5 may be utilised by the RNC or other network node as a simple way to cause the appropriate switching to occur.

X represents the value of a measured quantity (for example: number of user equipment in a cell; cell load; uplink noise; cell throughput) that corresponds in this example to threshold point P3 in Figure 4. Default_ref_PO is the default reference power offset table that is applied when reconfiguring and adding mobiles to a cell.
1. Gather the measured quantity (Y).
2. If Y > (X+ Hysteresis) Then
3. default_ref_PO = ref_PO_A
4. Else If Y < (X) Then
5. default_ref_PO = ref_PO_B
   Endlf
6. Reconfigure active mobiles.

It will be appreciated that this algorithm may be readily adapted for more than two ranges and more than two power offset tables.

Hence, a trigger point causes the network to reconfigure active user equipment in real time with a new reference power offset table that is spectrally efficient for the prevailing cell conditions. Thus the reference power offset table is adapted to the prevailing cellular conditions in real time. This leads to an increase in cell throughput.

Also, as can be seen from Figures 3A and 3B, there is a kink in the tables because of the reference power offset points supplied and used in the interpolation formulae. Looking at Figure 3B, a block of 10,000 bits has a power offset of around 150. Looking at Figure 3A, a block of 10,000 bits has a power offset is of around 70. This is because the 16QAM modulation scheme is using more double the number of bits per symbol as QPSK and so it needs more power and is not so tolerant of poor environmental conditions. At small block sizes, however, the power for 16QAM will be higher than for QPSK. Because more power is used in the 16QAM case for smaller blocks then this contributes to noise rise since the power offset table determined by the reference power offset table in Figure 3A is using less power. The unnecessary noise rise prevents larger blocks from being selected in the Figure 3B case. So when large number of UEs are in a cell, the cell throughput will be less for 16AM as opposed to QPSK.

By doing a reconfiguration, the power offset is effectively reduced so that less power is needed for these transport blocks and so saves on an unnecessary noise rise. This saving allows other UE in the QPSK region to select larger blocks thus contributing to a cell throughput increase.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling user equipment communication within a cell, said method comprising the steps of:
determining a measured characteristic relating to user equipment communication within a cell; and
utilising, when said measured characteristic falls within one of a plurality of ranges, a power offset table associated with that range for user equipment communication, each power offset table being associated with one of a plurality of different modulation schemes.

2. The method of claim 1, wherein said step of utilising comprises:
utilising a first power offset table associated with a first modulation scheme when said measured characteristic falls within a first range and utilising a second power offset table associated with a second modulation scheme when said measured characteristic falls within a second range.

3. The method of claim 1 or 2, wherein said step of utilising comprises:
utilising a further power offset table associated with a further modulation scheme when said measured characteristic falls within a further range.

4. The method of any preceding claim, wherein each range is non-overlapping.

5. The method of any one of claims 1 to 3, wherein each range is overlapping by a hysteresis amount and said step of utilising comprises:
utilising, when said measured characteristic falls within solely within one of said plurality of ranges, a power offset table associated with that range and otherwise continuing to utilise that previously utilised power offset table.

6. The method of any preceding claim comprising the step of:
determining modulation schemes supported by said user equipment and
wherein said step of utilising comprises:
utilising said power offset table associated with said range only when said modulation scheme associated with said power offset table is supported by said user equipment.

7. The method of any preceding claim, comprising the steps of:
determining a plurality of expected throughput curves for user equipment when utilising each of said power offset tables optimised for associated modulation schemes and operating under a range of said measured characteristics; and
setting ranges by identifying intersection points between said curves as range end points and associating a power offset table with each range which optimises expected throughput.

8. The method of any preceding claim, wherein said measured characteristic comprises an indication of at least one of: a number of user equipment within said cell, a load on said cell, uplink noise and cell throughput.

9. A network node operable to control user equipment communication within a cell, said network node comprising:
determination logic operable to determine a measured characteristic relating to user equipment communication within a cell; and
utilisation logic operable to utilise, when said measured characteristic falls within one of a plurality of ranges, a power offset table associated with that range for user equipment communication, each power offset table being associated with one of a plurality of different modulation schemes.

10. The network node of claim 9, wherein said utilisation logic is operable to utilise a first power offset table associated with a first modulation scheme when said measured characteristic falls within a first range and utilising a second power offset table associated with a second modulation scheme when said measured characteristic falls within a second range.

11. The network node of claim 9 or 10, wherein said utilisation logic is operable to utilise a further power offset table associated with a further modulation scheme when said measured characteristic falls within a further range.

12. The network node of any one of claims 9 to 11, wherein each range is overlapping by a hysteresis amount and said utilisation logic is operable to utilise, when said measured characteristic falls within solely within one of said plurality of ranges, a power offset table associated with that range and otherwise continuing to utilise that previously utilised power offset table.

13. The network node of any one of claims 9 to 12, comprising:
modulation scheme determining logic operable to determine modulation schemes supported by said user equipment and wherein utilisation logic is operable to utilise said power offset table associated with said range only when said modulation scheme associated with said power offset table is supported by said user equipment.

14. The network node of any one of claims 9 to 13, comprising:
range determining logic operable to determine a plurality of expected throughput curves for user equipment when utilising each of said power offset tables optimised for associated modulation schemes and operating under a range of said measured characteristics and to set ranges by identifying intersection points between said curves as range end points and associating a power offset table with each range which optimises expected throughput.

15. A computer program product operable, when executed on a computer, to perform the method steps of any one of claims 1 to 8.
